# EUROPEAN PATENT APPLICATION

(11) **EP 4 120 691 A1**
(43) Date of publication of application: **18.01.2023**
(21) Application number: 21185372.6
(22) Date of filing: 13.07.2021
(51) Int. Cl.: H04R 1/10, H04R 5/04, G09B 5/06, G09B 5/14, G06F 3/16, H04R 5/033, H04R 27/00

(54) **NOISE-CANCELLING HEADSET FOR USE IN A KNOWLEDGE TRANSFER ECOSYSTEM**

(71) Applicant: Accent Electronic S.A., MD-2001 Chisinau (MD)
(72) Inventor: Russu, Vladimir, 2001 Chisinau (MD)
(74) Representative: Hofmann, Matthias

(57) **Abstract**

The present invention provides a noise-cancelling headset for participants of a multi-group classroom that is integrated for use in a knowledge transfer ecosystem, comprising a connection unit, such as a jack, a Bluetooth, a Wi-Fi or a 5G connection unit, for receiving learning content from a database of the knowledge transfer ecosystem, a microphone for receiving sound from a surrounding area of the classroom, a pair of speakers for outputting sound, such as noise-cancelling sound or audio learning content sound, received from the knowledge transfer ecosystem, and a processing unit being connected to the connection unit, the microphone and the pair of speakers, and being configured to reduce a noise of the surrounding area anticipated by a participant listening to the sound outputted by the pair of speakers, wherein the processing unit is further configured to control the sound outputted by the pair of speakers based on a group affiliation of the headset regarding the participants of the classroom.

## Description

### TECHNICAL FIELD

The present invention relates to a noise-cancelling headset for participants of a multi-group classroom, a control terminal for a teacher among participants of a multi-group classroom, an arrangement for participants of a multi-group classroom and a computer-implemented method for a sound control in headsets for participants of a multi-group classroom for use in a knowledge transfer ecosystem.

The present invention also relates to a computer-readable storage medium storing program code, the program code comprising instructions for carrying out such a method.

### BACKGROUND

Rural areas are facing substantial demographic changes due to social, technological and economic drawbacks compared to the infrastructure and networks provided in larger cities or metropolitan areas. Hence, also the educational sector of rural areas faces dramatic changes, such as closures of schools due to lack of a sufficient number of pupils or teachers forming a class within a predefined distance radius. This results in longer distances and increased time for the pupils to get to their schools.

Homeschooling is an alternative to classroom training and comprises synchronous learning phases via video conferences and asynchronous learning phases using learning platforms to organize and to provide learning content as well as proficiency tests to the pupils. However, it is well known that distance learning cannot replace the variety of interaction between the teacher and the pupils in the classroom. Particularly, younger pupils draw their motivation from collective learning and the real-world interaction with the teacher.

The so-called 'E-Dome' concept provides a knowledge transfer ecosystem with a novel teaching approach, which is particularly suitable for rural areas, where different age groups of pupils can be taught in a merged classroom in order to use the classrooms at highest possible capacity. Knowledge transfer ecosystem can in particular refer to a technical system and/or a plurality of interconnected technical modules for use in the educational sector that facilitate a transfer of information stored in databases or available through teachers to pupils for educational purposes. The knowledge transfer ecosystem may comprise a broadband network, a so-called Knowledge Factory, and end-user devices. The broadband network can comprise a mobile network, such as a Wi-Fi, 4G or a 5G network or a fixed-line network, such as a fiber optical network. The Knowledge Factory comprises a comprehensive repository of educational content, such as e-learning offerings for pupils of all age groups, such as e-books, online-courses, learning apps, distance learning courses by specialized teachers or such, for playback on the end-user devices, such as a computer, a laptop, a tablet, a mobile phone or such. Typically, educational content includes multi-media content that comprises both, visual educational content, such as slides, videos, interactive applications or such, and audio educational content, such as audio learning courses, audio books or a sound stream corresponding to the visual educational content.

For the asynchronous learning phases, the pupils are provided with educational content streamed via a broadband network from the Knowledge Factory. In the synchronous learning phases, the teacher in the classroom interacts with the pupils of the age groups in order to motivate a new topic, address questions or receive feedback on the proficiency of the pupils. The succession and the content of synchronous and asynchronous learning phases can be organized via a teaching schedule that is prepared by the teacher or a service instance of the Knowledge Factory.

Due to different curricula among the different age groups of pupils, in the merged classroom the use of noise-cancelling headsets is necessary on the one hand to allow a quiet work environment for each pupil and on the other hand to listen to audio educational content streamed from the Knowledge Factory of the E-Dome. The currently available noise-cancelling headsets providing the audio educational content are linked via a Bluetooth or a jack connection to the end-user device that provides the visual educational of the streamed educational content to the pupil.

However, when using conventional noise-cancelling headsets, the pupils are often immersed in the educational content stream and a natural interaction of the teacher with the pupils is inhibited. It is e.g. difficult for the teacher to draw attention from the pupils of a certain age group during an asynchronous learning phase, when coordination or explanations for the specific age group is necessary, without disturbing the other pupils in the classroom.

Further, existing headsets are often inflexible regarding the group affiliation and therefore require dedicated technical preparation time for assigning them to user groups. Teachers often have neither the time nor the knowledge to configure or re-configure the headsets for the pupils being assigned to an age group of the merged, multi-group classroom.

Hence, there is a need for noise-cancelling headsets that allow a more natural interaction among students and the pupils with the teacher during class. Further, the coordination of the headsets by the teacher must be simple and intuitive, particularly allowing the teacher to address only a specific age group of the merged classroom.

### SUMMARY OF THE INVENTION

The objective of the present invention is to provide a noise-cancelling headset for participants of a multi-group classroom for use in a knowledge transfer ecosystem, which overcomes one or more of the above-mentioned problems of the prior art.

A first aspect of the invention provides a noise-cancelling headset for participants of a multi-group classroom for use in a knowledge transfer ecosystem, the noise-cancelling headset comprising a connection unit, such as a jack, a Bluetooth, a Wi-Fi or a 5G connection unit, for receiving learning content from a database of the knowledge transfer ecosystem, a microphone for receiving a surrounding sound from a surrounding area of the classroom, a pair of speakers for outputting sound, such as noise-cancelling sound and/or sound received from the knowledge transfer ecosystem as audio educational content, and a processing unit for computing the noise cancelling sound based on the received surrounding sound, wherein the processing unit is configured to control the sound outputted by the pair of speakers based on a group affiliation of the headset.

By this, the teacher is able to address the pupils verbally during a synchronous or asynchronous self-learning phase streamed from the Knowledge Factory, particularly through an audio stream recorded by the microphone at the teacher's headset that is outputted exclusively, alternatively or additionally to a stream of the audio educational content outputted by the pair of speakers of the headset of the pupils affiliated to the same group.

It shall be clear that the classroom comprises a plurality of pupils and at least one teacher, wherein the pupils can be categorized or assigned to one or more groups among the participants of the classroom. Particularly, each of the participants or a sub-group of the participants may wear a noise-cancelling headset.

A group affiliation of a participant refers to the participant being a member of said group. A participant and/or a noise-cancelling headset can at different times be assigned to one or more groups of the classroom. However, a participant and/or a headset may only be assigned to one group at a time.

Noise-cancelling may refer to a method for reducing an unwanted sound from the area surrounding the headset by the addition of a sound outputted by the pair of speakers specifically designed to cancel the unwanted sound.

The noise-cancelling headset of the first aspect can be based on commonly known noise-cancelling headsets.

The pair of speakers is configured to output the sound received from the knowledge transfer ecosystem as audio educational content. For example, the audio educational content can comprise the to-be-outputted sound as a digital encoding of the waveform of the to-be-outputted sound.

Preferably, the pair of speakers is configured to output sound at least in the frequency range perceivable by a normal, healthy human ear, i.e. the frequency range of 20 to 20.000 Hz. Preferably, the microphone is configured to record the sound from a surrounding area within this frequency range.

The processing unit can comprise an integrated circuit, such as a microprocessor.

In a first implementation of the noise-cancelling headset according to the first aspect, the processing unit is configured to control an intensity of the noise-cancelling sound and/or a loudness of the audio educational content sound outputted by the pair of speakers based on the group affiliation of the headset.

By this, the teacher is able to address the pupils during an asynchronous self-learning phase streamed from the Knowledge Factory despite the activated noise-cancellation of the headsets of the pupils that are attributed to a specific group.

For example, the teacher can select, e.g. using a control panel, to address a specific group of participants. In this case, the noise cancelling of the headsets of the participants of the specific group can be reduced upon selection/activation via the control panel so that the participants can hear the voice of the teacher despite wearing the noise-cancelling headset. Hence, the teacher is able to address the pupils dynamically using the headsets and the control panel of the knowledge transfer ecosystem.

In a further implementation of the noise-cancelling headset according to the first aspect, the processing unit is configured to switch the sound outputted by the pair of speakers from a first sound channel to be outputted to a first group of participants to a second sound channel to be outputted to a second group of participants.

A sound channel can particularly comprise a specific educational content that is streamed from the Knowledge Factory at a time.

A sound channel can also comprise the teachers voice or the voices of the pupils wearing the headsets that are affiliated to the same age group e.g. the stream being outputted as a live audio stream to the headsets.

This allows the teacher to control the sound channel outputted to the headsets of a group, to change the teaching schedule, to draw attention of the pupils or to directly address them e.g. during an asynchronous self-learning phase.

In a further implementation of the noise-cancelling headset according to the first aspect, the processing unit is configured to control the sound based on a data input by a teacher among the participants of the classroom received via the connection unit, particularly based on a data input e.g. received from a control terminal, particularly a data input by the teacher using a control terminal.

The control terminal allows the teacher the sole control over the manipulation of the sound outputted to the headsets of the groups.

In a further implementation of the noise-cancelling headset according to the first aspect, the noise-cancelling headset further comprises a control button for generating a data input on activation, the control button being connected to the processing unit and particularly being associated with a group affiliation, wherein the processing unit is configured to control the sound based on the data input from the control button. This allows the pupils e.g. to talk directly to the teacher on activation/deactivation.

The at least one control button can comprise a manual or a digital electronic button, such as an electronic switch button, an electronic push button, an electronic slider or a touch- and/or motion sensitive sensor, such as a touch pad or a gyroscope.

A button allows a simple and intuitive way to configure and/or manipulate the output to the headsets of the groups by the teacher.

In a further implementation of the noise-cancelling headset according to the first aspect, the processing unit is configured to control the sound based on an audio input recorded by the microphone from the surrounding area of the classroom, the audio input particularly being a voice input by the teacher. Particularly, the processing unit of the headset according to the invention can be configured to record and analyze the voice input, such as a spoken command of the teacher, thereby converting the voice input into a data input for the control of the pair of speakers of the headset.

Particularly, the processing unit can be configured to reduce the noise cancelling sound and/or audio educational content outputted by the pair of speakers, particularly based on the spoken command of the teacher. For example, the noise-cancelling level and/or loudness of the audio educational content outputted by the pair of speakers can be reduced by at least 10%, at least 20%, at least 30%, at least 40%, at least 50 %, at least 60%, at least 70 %, at least 80 % or at least 90% of the original noise-canceling level and/or loudness. The processing unit can also be configured to reduce the loudness stepwise and/or in a fading manner to a final noise-canceling level and/or loudness reduction. Further, the processing unit can be configured to reduce the noise-canceling level and/or loudness of the audio educational content outputted by the pair of speakers dynamically, e.g. based on a noise level recorded and analyzed by the processing unit. For example, the noise-cancelling level and/or loudness of the audio educational content outputted by the pair of speakers can be reduced by at least 10%, at least 20%, at least 30%, at least 40%, at least 50 %, at least 60%, at least 70 %, at least 80 % or at least 90% of the noise level.

In a further implementation of the noise-cancelling headset according to the first aspect, the processing unit comprises a speech recognition unit for extracting speech, e.g. in text form, input from the sound received from the surrounding area of the classroom via the microphone, the speech recognition unit particularly being a machine learning speech recognition unit.

The voice command / voice recognition allows as simple, intuitive and hands-free way to configure and/or manipulate the output to the headsets of the groups by the teacher.

In a further implementation of the noise-cancelling headset according to the first aspect, the noise-cancelling headset further comprises a proximity detection unit for detecting a spatial proximity of the headset to at least one other headset, wherein the processing unit is further configured to affiliate the headset to the group affiliation of the other headset based on the detected spatial proximity. Particularly, the processing unit of a headset can automatically set the group affiliation of the first headset based on the proximity of another headset. For example, the headset can be set to the group affiliation of the other headset when the proximity detection unit detects the other headset within a predefined proximity to headset, e.g. when the proximity detection signal generated by the proximity detection unis base on the proximity of the headset to the other headset, exceeds a predefined detection signal threshold.

The proximity detection unit can comprise a sending unit and/or a receiving unit.

The proximity detection unit can comprise one or more optical sensors, sound sensors, position sensors, identification tags, short-range communication devices, positioning devices or such. The proximity sensors can have a read distance of more than 1 m, more than 2 m, more than 5 m, more than 10 m or more than 20 m or more 30 m and/or a spatial resolution of less than 5 m, less than 2 m, less than 1 m, less than 0.5 m, less than 0.2 m or less than 0.1 m.

The data input can comprise one or more measurement values, values generated or received by the proximity detection unit and meta data, such has identification data, particularly of headsets, end-user devices or the proximity detection unit, or such.

The headsets comprising the proximity detection unit allows the teacher or participants of a group to immerse and therefore actively participate in the educational content streamed to the headsets just by approaching participants of the same group. This allows an intuitive group interaction in a sound-isolated space within the multi-group classroom. Further, this allows providing spatially separated group work spaces in the merged, multi-group classroom.

In a further implementation of the noise-cancelling headset according to the first aspect, the processing unit is configured to affiliate the headset to the group affiliation of the other headset based on relating the detected spatial proximity to a threshold.

The definition of the threshold allows the definition of a radius of the group affiliation, e.g. by comparing the signal intensity of a sensor signal to the required threshold. Further, a threshold can ensure input data quality, e.g. regarding a minimal signal-to-noise ratio or fluctuation of a measurement signal or a minimal error probability regarding a specific device identification pattern.

This particularly allows a highly precise and/or specific and/or minimal-error proximity detection and reliable group affiliation.

In a further implementation of the noise-cancelling headset according to the first aspect, the proximity detection unit comprises a light sensor, in particular for a sensor for detecting light in an invisible range, for determining the spatial proximity and/or a relative orientation of the headset relative to another headset.

In this implementation, the noise cancelling headset can detect light emitted from a light emitter that is for example positioned on the headset of the teacher. Thus, the noise cancelling headset of the student can determine, if the teacher is facing the student. Correspondingly, it can be indicated that the teacher would like to communicate with the student. Subsequently, different actions can be performed. For example, a current audio program can be stopped and the noise cancelling be reduced, so that the student can hear the teacher. Thus, the noise cancelling of this implementation provides a simple way for establishing a teacher-student communication.

In a further implementation of the noise-cancelling headset according to the first aspect, the processing unit is configured to send and/or receive data input for controlling the sound outputted to the pair of speakers via the communication unit.

The data input can be received from another headset, from end-user devices, from the Knowledge Factory or such. This allows a sophisticated control of the sound outputted to the pair of speakers within the E-Dome knowledge transfer ecosystem.

In a further implementation of the noise-cancelling headset according to the first aspect, the processing unit is configured to distinguish between sound control operation modes of the headset according to one of the previous implementations and particularly to switch between the modes, wherein the buttons being connected to the processing unit are associated with the respective sound control operation modes, particularly each button being associated to exactly one of the respective sound control operation modes.

Sound control operation modes can refer to button signal- and/or voice command- and/or proximity sensor signal-controlled group affiliations. This allows the headset to be used in different contexts, e.g. for immersing in self-learning phases, for seamlessly switching between streamed content and live-teacher sessions and for dynamic group work.

The processing unit may be configured to distinguish further sound operation modes, which are not associated with above-mentioned modes, e.g. by data input-controlled group affiliation modes.

The processing unit may also be configured to classify sound operation modes. This allows override capabilities in case of conflicting mode settings, e.g. to prioritize data input-controlled over button-controlled modes, or vice versa.

A second aspect of the invention provides a control terminal for a teacher among participants of a multi-group classroom for use in a knowledge transfer ecosystem for generating and/or sending a control signal for controlling the sound outputted by noise-cancelling headsets, particularly the noise-cancelling headsets according to one of the embodiments of the first aspect, the control terminal comprising at least two buttons for generating the control signal, wherein each of the at least two buttons is associated to a group affiliation of at least one of the headsets, a data link unit being compatible with the connection unit of the headsets for setting up a data link connection to the headset, a processing unit being particularly connected to the at least two buttons and the data link unit for controlling the data link unit to send control signal to the headsets.

The control signal can refer to a data input for the processing unit.

A third aspect of the invention provides an arrangement for participants of a multi-group classroom for use in a knowledge transfer ecosystem, comprising a plurality of noise-cancelling headsets according to the first aspect, and at least one control terminal according to the second aspect of the invention.

The methods according to the fourth aspect of the invention can be performed by the noise-cancelling headset according to the first aspect of the invention. Further features or implementations of the method according to the fourth aspect of the invention can perform the functionality of the noise-cancelling headset according to the first aspect of the invention and its different implementation forms.

A further aspect of the invention refers to a computer-readable storage medium storing program code, the program code comprising instructions that when executed by a processor carry out the method of the second aspect or one of the implementations of the second aspect.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- FIG. 1: is an illustration of the 'E-Dome' knowledge transfer ecosystem using the noise-cancelling headsets in multi-group classrooms,
- FIG. 2: is an illustration of a noise-cancelling headset in accordance with an embodiment of the present invention,
- FIG. 3: is an illustration of a noise-cancelling headset in accordance with another embodiment of the present invention and a first embodiment of a control terminal according to the invention,
- FIG. 4: is an illustration of a noise-cancelling headset in accordance with another embodiment of the present invention and a second embodiment of a control terminal according to the invention,
- FIG. 5: is an illustration of a noise-cancelling headset in accordance with another embodiment of the present invention in a multi-group classroom situation,
- Fig. 6: is an illustration of a multi-group classroom situation using the noise-cancelling headsets and an embodiment of a control terminal according to the invention,
- FIG. 7: is another illustration of a multi-group classroom situation using the noise-cancelling headsets according to the invention, and
- FIG. 8: is a further illustration of a multi-group classroom situation using the noise-cancelling headsets according to the invention.

### DETAILED DESCRIPTION OF EMBODIMENTS

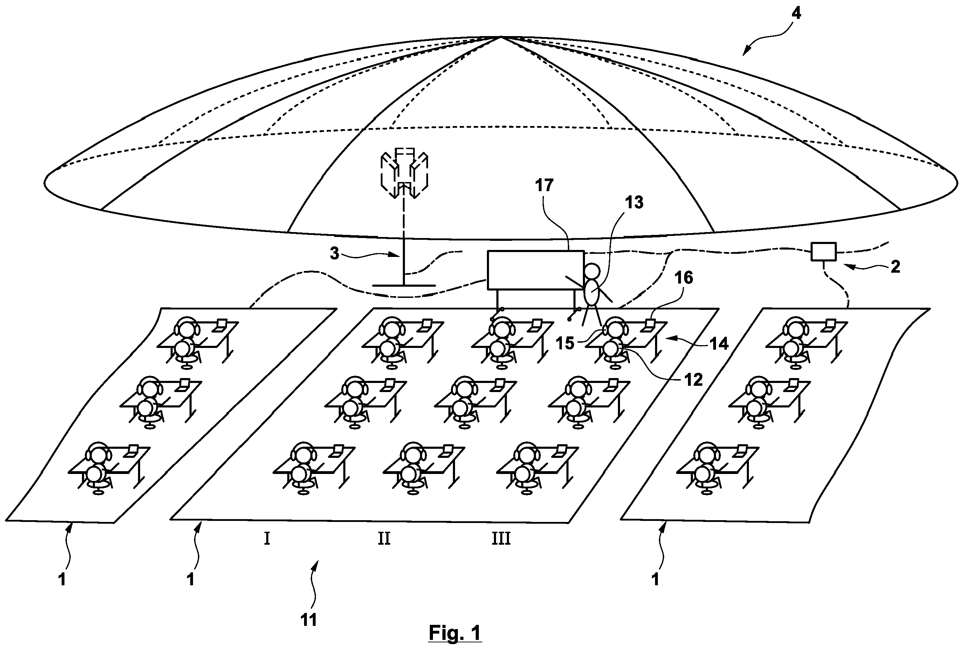

Figure 1 shows an illustration of the concept of the E-Dome knowledge transfer ecosystem. Classrooms are denoted with reference numeral 1, wherein different classrooms 1 can be located in the same school building or in different school buildings. The classrooms 1 are a meeting place for the participants 12, 13 of the classes, namely a plurality of pupils 12 and at least one teacher 13.

The classrooms 1 of the E-Dome knowledge transfer ecosystem are connected to at least one broadband network 2,3. The broadband network 2,3 can be a fixed-line broadband network 2, such as a fiber optical network, or a radio network 3, such as a Wi-Fi, 4G or 5G network. Each of the networks 2, 3 are to provide a high-speed internet connection to a so-called Knowledge Factory 4.

The Knowledge Factory 4 is a comprehensive repository of educational content, namely e-learning offerings for pupils of all age groups 11, such as e-books, online-courses, learning apps, distance learning courses by specialized teachers or such. The Knowledge Factory 4 can be a physical or cloud storage.

The educational content stored in the Knowledge Factory is made available to all participants in the classrooms 1 that are included in the E-Dome knowledge transfer ecosystem. The educational content can particularly comprise audio educational content and visual educational content.

In the merged classrooms according to the E-Dome concept, pupils 12 of a plurality of groups 11 are present in one classroom 1. Each pupil 12 wearing a headset is affiliated to at least one, preferably exactly one, of the groups 11 for participating in class in an organized manner.

A group affiliation of a pupil 12 refers to a group of pupils of the classroom 1, wherein the pupil 12 is a member of said group 11. The group affiliations are determined by common criteria among the pupils 12 being affiliated to the same group 11. The groups 11 can be age groups or grade groups that are coherent among almost all national school systems, wherein a group can range over one or more grades. However, the groups 11 can also be composed according to other criteria, e.g. for didactic reasons, such as proficiency, topic, educational content.

The group affiliation for the pupils 12 in class is determined by the group affiliation of the headset 15. However, the group affiliations of the headsets 15 are in accordance with the group affiliation of the pupil 12. For the age groups, the group affiliation of the pupil 12 can be performed by an authorized member of the educational system, e.g. a government official, a principal of the school, the teacher 13 or such. For other group criteria, other persons might be authorized, e.g. social workers for specialized group work. Teachers 13 can generally be authorized for group affiliations for didactic reasons. Also, automated systems, such as the Knowledge Factory might be authorized for group affiliations, e.g. performing same based on test results of automated proficiency tests.

A pupil 12 and/or a noise-cancelling headset 15, respectively, can be assigned to one or more groups of the classroom. According to the E-Dome concept, the teacher 13 must be assignable to more than one group in order to interact, i.e. communicate, with the different groups separately. However, each participant 12, 13 and the corresponding headset 15, respectively, may only be assigned to one group at a time.

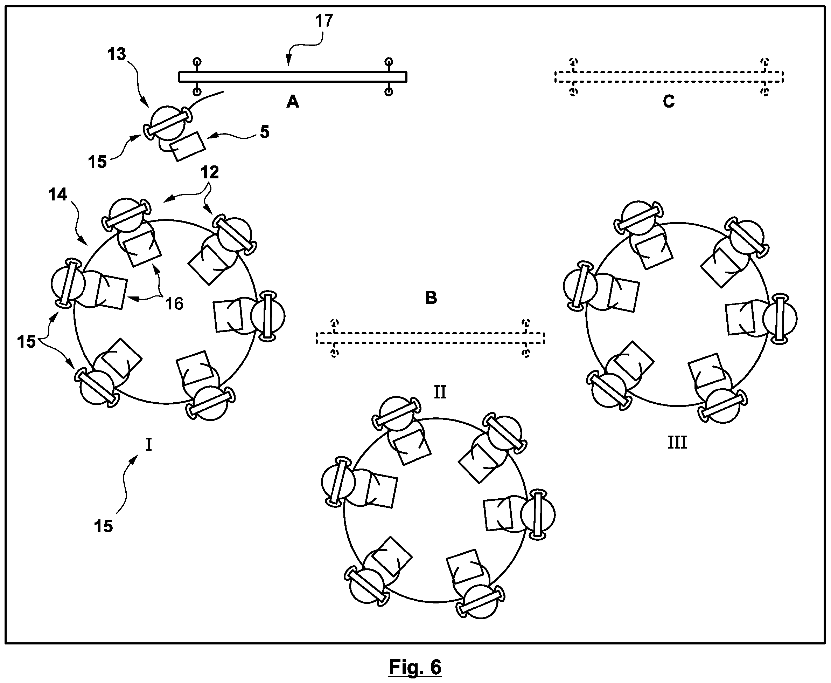

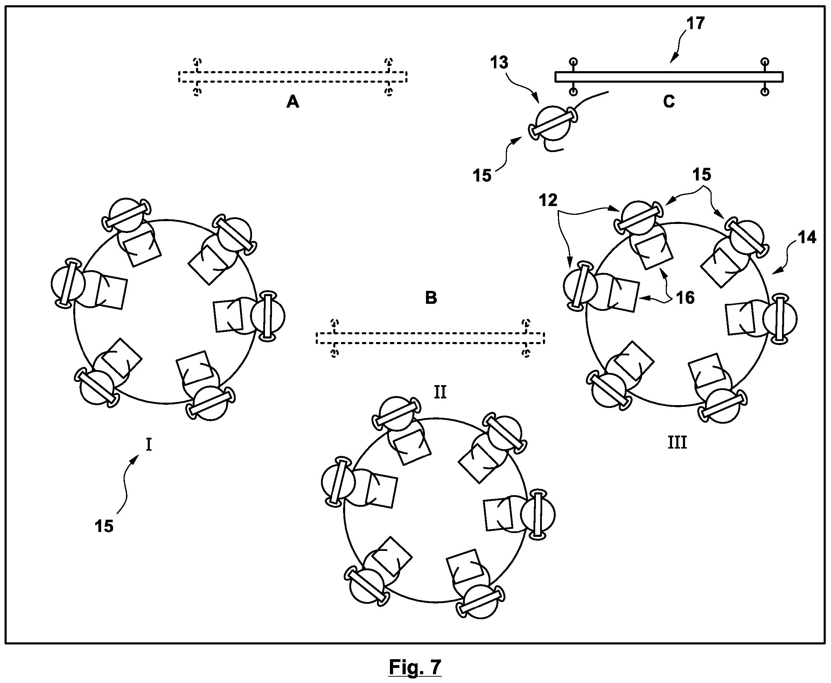

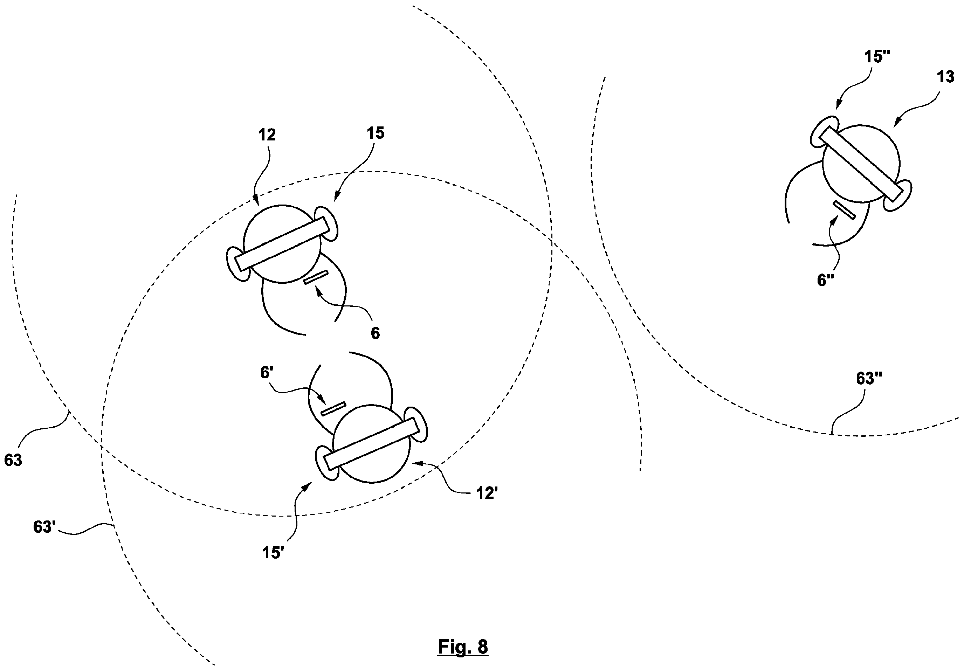

The pupils 12 are provided with a work space 14, e.g. a table work space 14 as shown in figure 1. The work spaces 14 of the pupils 12 of the same group 11 can be arranged in a location pattern according to the group affiliation. The work spaces of the pupils 12 of a same group 11 can be arranged behind each other, i.e. the table work spaces of the groups can be arranged row-wise or column-wise, for the case that the work spaces 14 of the pupils 12 are arranged in a maze pattern. The three exemplary age groups arranged in columns 15 in Fig. 1 are denoted with numerals I, II and III. The work spaces 14 or respective tables of the pupils of the same age groups can also be grouped in other location patterns, such as in rows or according to a proximity pattern. Further, the work spaces 14 can also be arranged in a non-maze pattern, such as a circular, multi-circular or random, self-organizing, patterns. The work space 14 or random patterns can particularly be a location pattern regarding a close proximity between pupils 12 of the same age group 11, such as locating workspaces 14 of different pupils 12 of the same age group 11 at one table (figures 6, 7). Any of the location patterns should allow a simple identification of the group affiliation of the plurality of pupils 12 in the classroom, particularly for the teacher 13. However, also arranging the work spaces 14 of the pupils 12 in the classroom 1 independently of a location pattern (figure 8) can be suitable for didactic, social, location limitation or other reasons.

According to the E-Dome concept, the pupils 12 are equipped with a noise-cancelling headset 15 on the one hand to allow a quiet work environment for each pupil 12 and on the other hand to enable the pupils to listen to audio educational content streamed from the Knowledge Factory 4. The pupils 12 can further be equipped with end-user devices 16, such as a computer, a laptop, a tablet or such, particularly for outputting the visual educational content via the screen of the same. Although end-user devices 16 can often also output audio educational content via connected or built-in loudspeakers, the participants of merged classrooms 1 according to the E-Dome knowledge transfer ecosystem will wear noise-cancelling headsets 15 in class in order to avoid distraction, whereby audio educational contents outputted via the loudspeakers are avoided.

The noise-cancelling headset 15 and the end-user devices 15 can be connected to each other, particularly linked, to each other in order to exchange information, such as educational content. The educational content can for example be streamed from the Knowledge Factory 4 to the end-user device 16, whereas the audio educational content of the streamed educational content is forwarded to the noise-cancelling headset 15.

The pupils 12 in the classroom 1 are taught in synchronous or asynchronous learning phases, according to the teaching schedule. In the asynchronous learning phases, the pupils 12 are provided with educational content streamed via the broadband network 2, 3 from the Knowledge Factory 4 according to the teaching schedule. In the synchronous learning phases, the teacher 13 in the classroom 1 interacts with the pupils 12 of at least one, particularly one, of the age groups 11 in order to motivate a new topic, address questions and/or receive feedback on the proficiency of the pupils 12.

The classroom and teacher, respectively, can be equipped with a board 17, such as a blackboard, a smartboard or such. The board 17 can be easily movable in the classroom 1, for example be provided with rollers, in order to move the table flexibly between different positions for always teaching pupils synchronous learning phases in proximity to the pupils 12 of the at least one addressed age group 11.

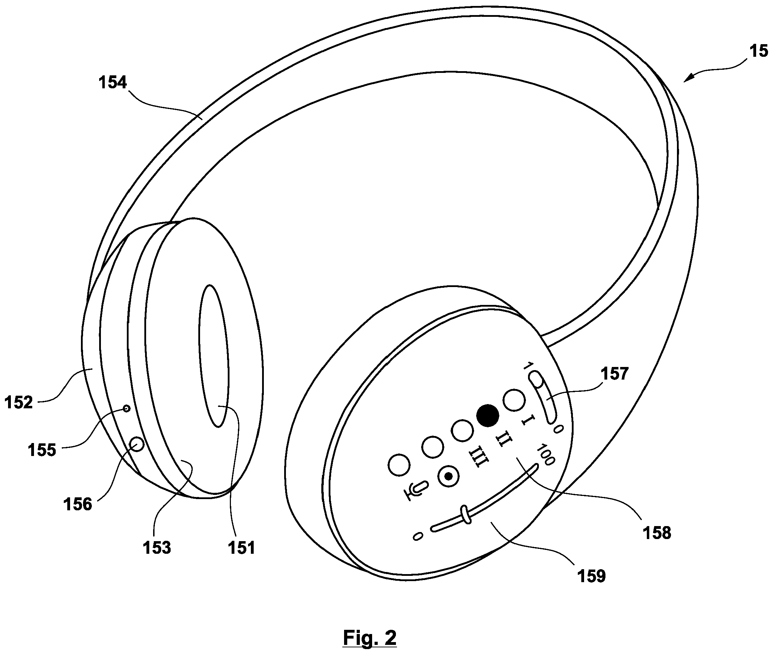

As shown in figure 2, the noise-cancelling headset 15 according to the invention can be an over-ear noise-cancelling headset. This type of headsets comprises a pair of speakers 151 for outputting audio educational content from the Knowledge Factory 4, a pair of housings 152 for carrying each of the pair of speakers 151, a pair of ear cups 153 each being attached to one of the pair of housings 141 for a sound isolation of the sound outputted by the speakers 151 with respect to the sound of the surrounding area of the headset 15, and a particularly adjustable headband joint 154 for carrying the pair of housings 152, and preferably for a wire connection between the pair of speakers 151. It shall be clear that the headset also comprises a power supply (not depicted), such as a battery e.g. an accumulator, or power connection for powering the headset 15.

Furthermore, the headset comprises a microphone 155 for receiving, particularly recording, sounds from the surrounding area of the participant wearing the noise-cancelling headset 15. A noise-cancelling headset 15 according to the invention can also comprise more than one microphone, particularly each of the pairs of housings 152 can carry one microphone 155.

The headset of Figure 2 also comprises a connection unit 156, namely a jack connector, for a connection with the Knowledge Factory 4. Alternatively or additionally, the connection unit 156 can comprise a Bluetooth, a Wi-Fi, a 4G or a 5G connection unit. Further, the headset 15 can comprise more than one connection unit 156. Particularly, the noise-cancelling headset 15 can comprise different connection units 156 in order to offer several ways of a data connection to the Knowledge Factory 4 and/or the end-user device.

The noise-cancelling headset can for example comprise a Wi-Fi, 4G and/or 5G connection unit for receiving the audio educational content directly from the Knowledge Factory through the broadband network 2,3 via a Wi-Fi, 4G and/or 5G connection.

Alternatively or additionally, the noise-cancelling headset 15 can also comprise a jack, a Wi-Fi and/or a Bluetooth connection unit for receiving the audio educational content from the end-user device 16 via a jack, a Wi-Fi and/or a Bluetooth connection, since state of the art laptops, tablets and mobile phones comprise jack, Wi-Fi, 4G, 5G and Bluetooth connection devices.

The microphone and/or the connection device 156 are preferably integrated in at least one of the pair of housings 152.

Moreover, the headphone 14 comprises a processing unit (not depicted). The processing unit can be integrated in one of the pair of housings for adjusting the sound outputted by the pair of speakers 151. The processing unit can also be integrated in both of the pair of housings as the processing unit is configured to execute tasks close to one of the electrical components 141, 155, 156 etc.

The processing unit is connected to the connection unit 156, the microphone 154 at the pair of speakers 151. The processing unit can be configured to receive, store, encode, convert and distribute streamed educational content, particularly audio educational content.

The term streaming refers to a real-time delivery of moving images, moving text and sound over the Internet, particularly via a broadband network 2,3. However, streaming can also refer to types of streaming with no real-time delivery, such as 'download and play' or progressive download.

The processing unit and/or the communication device can further be configured to establish a direct connection to the Knowledge Factory. This allows a direct streaming from the Knowledge Factory 4 via the communication unit, particularly a Wi-Fi, 4G or 5G connection unit.

The processing unit can further be configured to extract audio educational content from the streamed educational content on the basis of streaming protocols, such as SRRTP or RTSP. For the headset 15 to receive the educational content via over-the-air connection from the end-user device 16, the data connection between the headset 15 and the end-user device 16 can be established manually by one of the participants 14, 16 or automatically using a setup application of the end-user device 16. For a jack connection, particularly for a standardized jack connection, often no dedicated action other than establishing the plug connection is necessary.

Furthermore, the processing unit is configured to reduce a noise of the surrounding area anticipated by the participant listening to the sound outputted by the pair of speakers 151. Particularly, the processing unit is configured add an inverted sound from the surrounding area to the sound to be outputted by the pair of speakers 151. This minimizes the environment sound anticipated by the participant wearing the noise-cancelling headset 15, allows to cancel at least parts of the sound passing the pair of ear cups 153. This is to fulfill the core objective of a noise-cancelling headset 15.

According to the invention, the processing units is further configured to control the sound, outputted by the pair of speakers 151 based on a group affiliation of the headset 15 regarding the participants 12, 13 of the classroom 1, particularly the pupil 12 or a group of pupils 12.

The control of the sound particularly refers to an alteration of the sound from the streamed audio educational and/or the noise-cancelling content. For example, a further audio content, such as a data stream of the teacher's voice recorded by a microphone, can be added to the streamed audio educational content. Also other audio streams may be added or subtracted from the sound to be outputted by the pair of speakers 151, such as a monotone or varying tone, succession of tones or sounds, e.g. as a characteristic signal for attracting the attention of the person listening to sound outputted by the pair of speakers 151.

Alternatively or additionally, control can refer to an alteration of the audio stream volume and/or level of noise cancelling of the sound outputted to the pair of speakers 151 in order to being able to attract the attention of the participant 12, 13 wearing the headset 15, particularly the attention of the pupils 12 by the teacher 13, or being able to address the participant 12, 13 wearing the headset 15 through the noise-cancelling and/or the audio stream playback.

Moreover, the control, particularly of the noise-cancelling and/or the volume of the audio stream of the headsets 15 affiliated to a certain group, can refer to an alteration based on a respective data input to the processing unit, so that e.g. the participant 12,13 wearing the headset 15 can listen to the surrounding area, particularly the instructions of the teacher 13.

Alternatively or additionally, the control can refer to an alteration of the content of the audio educational content, i.e. the audio stream, based on the data input. As an example, the channel of an educational content can be changed, for example from one online-teaching session to another parallel running online-teaching session or from an online-teaching session to a prerecorded e-learning session, each content being respectively streamed from the Knowledge Factory 4.

The control of the sound outputted by the pair of speakers is facilitated by a data input to the processing unit.

Different exemplary application scenarios of the control of the sound outputted to the pair of speakers 151 will be described later.

The noise-cancelling headset 15 further comprises a plurality of buttons 157, 158, 159, wherein each of the buttons can be an analog or a digital electronic button, such as an electronic switch button, an electronic push button, an electronic slider or a touch- and/or motion sensitive sensor. A slide button 159 can for example be provided as an electromechanical slide bar or as a touchpad.

Each of the buttons 157, 158, 159 is connected to the processing unit, wherein each of the button 157, 158, 159 generates a data input to the processing unit when activated.

The data input can be a digital data input, representing an on/off signal or a succession of on/off signals, as e.g. used for digital communication protocols, to the processing unit, or an analog data input for representing e.g. a signal intensity and/or measurement value. The analog data input can be a continuous or discontinuous signal. The type of data input corresponds to the type of button 157, 158, 159.

The noise-cancelling headset 15 of figure 2 has an on-off slide button 157 for activating or deactivating the headset 15, three group affiliation buttons 158, namely I, II, III, for assigning the headset 15 to one a respective group 11, and a volume slide button 159 for adjusting the volume of the sound outputted by the pair of speakers 151.

Each group affiliation button 158 being associated with an affiliation to respective group 11. On activation of the affiliation buttons 158, a respective data input for the processing unit is generated in order to assign the headset to a respective group 11.

The activation status of each of the buttons 157, 158, 159 can be indicated by haptic or visual means, for example a bi-stable switch button or profile markings and by lights integrated in the buttons or a display, respectively. As an example, the activation of button 158 of the group II is indicated by a shading of the respective button II 158, representing an LED lighting of the button II. The positions of the buttons 157, 159 is indicated by a knob position. The integration of the buttons 157, 1548, 159 allows a simple and intuitive way of adjusting the most important settings of the headset 15 by the participant 12, 13 wearing the headset 15, particularly without the necessity to take off the headset 15.

A data input corresponding to the buttons 157, 158, 159 can also be generated by verbal input of one of the participants via the microphone 155. For this purpose, the processing units can be configured to receive a sound data input via the microphone 155, perform a speech analysis, extract voice commands associated with an assignment of the headset 15 to a group 11 and to assign the headset 15 to a respective group 11. This particularly allows e.g. the teacher 12 to control of the group affiliation and/or the sound outputted by the pair of speakers of the pupils 13 without employing an end-user device, such as a control terminal 5, allowing a hands-free, intuitive coordination of the classroom activities by the teacher 13, particularly regarding the interaction with the pupils 13.

The processing unit can comprise a speech recognition unit (not depicted) for performing speech recognition. The speech recognition unit may be configured to perform speech recognition on the basis of machine learning. A machine learning speech recognition unit can be particularly advantageous for a minimal-error and precise understanding of the voice commands also in a comparably loud surrounding in the classroom 1.

It shall be clear that the headset 15 comprises a storage medium to particularly store the training data for training the machine learning speech recognition unit.

The headset 15 can further comprise a proximity detection unit (not depicted) for detecting a spatial proximity of the headset to at least one other headset and generating a corresponding data input for the processing unit. The proximity detection unit is connected to the processing unit, such that the processing unit can receive the data input from the proximity detection unit. The processing unit is further configured to affiliate the headset 15 to the group affiliation of the other headset based on the data input.

The proximity detection unit can be a proximity sensor, such as a camera with image and/or video analysis capabilities to detect a spatial extremity of a participant 12,13 or a near field induction sensor, such as an NFC or RFID unit, or a positioning unit, such as a 5G positioning unit allowing a highly precise positioning detection. A data input is generated by the proximity detection unit through detecting a spatial proximity of the headset 15 to another headset 15 in the classroom 1. Preferably, the proximity detection unit comprises a sending unit and/or receiving unit, such as an NFC, RFID or 5G sending and/or receiving unit, wherein the processing units is configured to detect a spatial proximity of one headset 15 to another headset 15 or a group of other headset 15. A respective system of a headset 15 allows a spatial mapping of headset 15 in the classroom 1.

The processing unit can be configured to affiliate the headset 15 to the same group 11 of the other headset on the basis of a threshold value. The threshold value can be set by default or by one of the participants 12, 13, particularly the teacher 13, e.g. via the end-user device 16. The threshold for the group affiliation and the threshold for re-setting the group affiliation based on the data input can be equal or different. The processing unit is particularly configured to compare the data input received from the proximity detection unit to the threshold value. The processing unit can for example set affiliate the headset 15 to the group 11 of the other headset 15 when the data input is larger and/or smaller than the threshold value. If, for example a signal intensity to the other headset 15 as the data input from the proximity detection unit is higher than the set signal threshold or a distance value determined by a positioning sensor as the data input from the proximity detection unit is for example smaller that a set threshold, the processing unit is affiliating the headset 15 to the same group as the other headset 15.

The setting of the threshold value allows the adjustment of a necessary proximity between a first headset 15 worn by a first participants 12, 13 and a second headset 15 worn by another participants 12, 13, in order to affiliated the first headset to the same group as the second headset, in order to allow an interaction between the first participant 12, 13 and the second participant 12, 13 or an immersion of the first participant 12,13 in the audio stream outputted to the pair of speakers 151 of the headset 15 of the second participant 12,13. It shall be clear that the second headset 15 can also be a group of headsets 15 being affiliated to the same group 11. Same applies for respective second participants 12,13 each wearing one of the second headsets 15.

The proximity detection unit can also comprise a light sensor, e.g. an IR sensor, for detecting the spatial proximity and/or an orientation of the other headset based on light that is emitted from the other headset, for example from an IR LED of the other headset.

An IR LED can refer to an infrared light-emitting diode that is configured to emit visible and/or non-visible light, particularly in the infrared spectral range of light, of a characteristic signal pattern. The IR sensor can be configured to sense the signal pattern of the IR LED and/or other signal patterns of IR LEDs. The signal pattern can be a spectral, time-wise or spatial pattern, such as a pattern with characteristic spectral peaks, a characteristic signal sequence and a characteristic spatial arrangement of IR LED light sources, the IR light sources being comprised in the LED.

The signal pattern of the IR LED can further be associated with a group affiliation, particularly with the group affiliation of the headset 15. The processing unit can be configured to affiliate the headset to the group of the other headset 15 when the sensor senses the specific signal pattern from the other headset 15. The intensity of the signal from the other headset 15 can be sensed by the sensor of the headset 15 and can be compared to a signal threshold value regarding a required spatial proximity for affiliating the headset to the group of the other headset. Particularly in combination with the threshold, this facilitates a proximity-dependent group affiliation of the headset 15. Furthermore, since the IR LED can be configured to emit light only in a preferred direction, e.g. a direction in front of the person who is wearing a headset with the IR LED, the headset can determine not only the spatial proximity of the other headset, but also whether the wearer of the other headset is facing towards the one headset.

The IR LED and/or the IR sensor can be integrated in the headset, particularly integrated in one or both of the pair of housings 152. Particularly, the IR LED and/or the IR LED sensor can be integrated in the front of the housings 152, such that the sensor senses the signal pattern when one participant 12, 13 wearing the headset faces another participant 12, 13 wearing the other headset 15. This allows a dynamic switching of the group affiliation of the headset according to the conversation scenario. Particularly in a group scenario, the group affiliation of the headset can switch dynamically between participants located at different orientations sections regarding the other headsets 15, wherein the sensor of the headset 15 can distinguish headset in predefined orientation section ranges.

It shall be clear that the proximity detection must not be limited to IR LED and IR sensors, but can also comprise other LED types and other emission sources for detecting the spatial proximity and/or an orientation of the other headset.

The processing unit can further be configured to distinguish between modes of operations. Modes of operations refer to the affiliation of a headset to a specific group according to a data input to the processing unit. Hence, each of the buttons 158 refer to a mode of operation of the headset 15. Further, the data input received from the microphone 155 and/or the proximity detection unit can refer to further mode of operation, respectively.

In order to set the above described mode of operation of the headset 15 regarding the data input via microphone 155 and proximity detection unit, the headset 15 can comprise additional group affiliation buttons 158 as indicated in figure 2, wherein the button 158 referring to a data input by the proximity detection unit (proximity mode) is indicated by a circle with a central dot and the button 158 referring to a data input by voice command mode is indicated by a microphone icon.

Depending on the activation of the respective buttons 158 of the headset 15 of the teacher 13, and of the headsets 15 of the pupils 12 a simple and intuitive affiliation of the headsets 15 to a group can be performed by the participants 12, 13 themselves. The selected mode of operation of the headset can be selected specifically regarding the specific interaction between the teacher 13 at the pupils 12 of the different groups 11 in the classroom 1.

However, a data input for a group affiliation can also be set independently from the group affiliation buttons 158 of the headset. For example, an online-teacher may be assigned with the necessary administration rights within the E-Dome knowledge transfer ecosystem and send a data input from the Knowledge Factory through the broadband network 2,3 to the respective headset 15 or group of headset 15 of the participants of the online-teaching session in order to affiliate the respective headset(s) 15 to a certain group, e.g. for a group discussion session.

It shall be clear that the headset 15 can also have other shapes and types of noise-cancelling headsets than the headset 15 shown in figure 2. For example, the headset can be a jogging headset or an in-ear headset, wherein the joint is a cord with wire connection between the pairs of housings 152 and the pair of speakers 151, respectively. The pairs of housing 152 and the pair of speakers 151, respectively can also have no wire connection, e.g. an over-the-air connection, particularly using one of the radio-based connection units 156, such as a Wi-Fi, a 4G, a 5G or a Bluetooth connection unit.

It shall be clear that all electronic components of the headset 15 can be arranged in the housing of the headset 15, particularly located in one of the pair of housings 152. However, the processing unit, the microphone 155, the communication unit 156 and/or the buttons 157, 158, 159, or parts of the said, can also be arranged outside the pair of housings 152, particularly as separate units, however connected to the pair of speakers 151. This allows more compact and/or more ergonomic shapes of the headsets 15, allowing a more comfortable wearing of the headsets 15, particularly since the headsets 15 may be worn by the participants 12, 13 throughout the day.

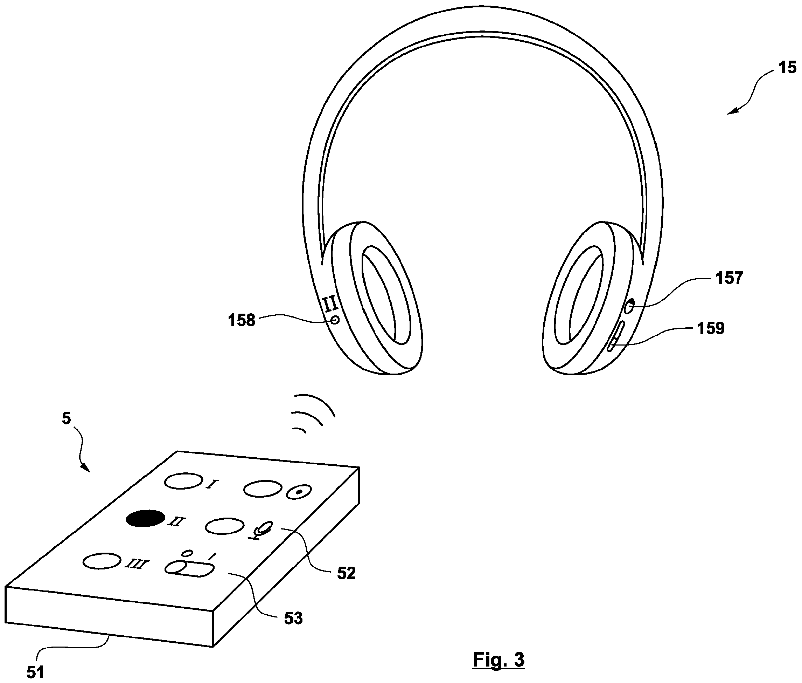

Figure 3 shows a further embodiment of the headset 15 with a default group affiliation, here group II. The group affiliation button 158 is reduced to an indication lamp when being activated. The reduction of the group affiliation buttons 158 prevent misuse, particularly misaffiliation, of the headset 15 by the pupils 12.

Figure 3 further shows an embodiment of a control terminal 5 for a teacher 13 for generating data inputs referring to the modes of operations of processing unit of the headset 15, particularly of the headset(s) 15 worn by the pupils(s) 12.

A combination of at least one headset 15 according to a first aspect of the invention and a control terminal 5 according to a second aspect of the invention is referred to as an arrangement according to the third aspect according to the invention.

For unique identification of each headset 15, particularly for the use in an arrangement, each headset can have a unique identifier within the classroom and/or the E-Dome knowledge transfer ecosystem, implemented for example in the communication protocol and associated with the serial number of the processing unit of the headset 15 or the headset itself. The identifier can be stored in the storage medium of the headset 15 and/or in the Knowledge Factory 4.

The control terminal 5 comprises a housing 51, a data link unit (not depicted) for setting up a data link connection to the connection unit of the headset, group affiliation buttons 52 for generating data inputs, wherein each of the buttons 52 is associated to a group affiliation, and a mode of operation, respectively, of the headset 15 of the classroom 1, and a processing unit (not depicted) that is configured to send the input data generated on activation of one of the buttons to the connection unit of headsets 15, particularly the headsets of figure 3, via the data link unit. The data link unit and the group affiliation buttons 52 are connected to the processing unit that is configured to send the input data to the headset 15. It shall be clear that the control terminal 5 also comprises a power supply for powering the control terminal 5.

It shall further be clear that the terminal 5 can comprise more than one data link unit and further group affiliation buttons 52.

It shall also be clear, that the control terminal 5 comprises a data link unit of at least one of the communication units of the headsets 15 in order to be able to set up a data link connection between the control terminal 5 and the headsets 15. The establishment of the data link connection is then also based on the respective connection protocol or communication standard of the respective type of communication unit employed, for example IEEE 802.11 for a Wi-Fi connection.

The processing unit of the control terminal 5 may be configured to automatically set up data link connections to the data link units of each of the headsets 15 available, that means activated by a button 157, in the classroom 1 when the switch on/off button 53 is activated, i.e. the control terminal 5 is powered.

As for the control buttons 158 of the first embodiment of the headset 15, each one of the three group affiliation buttons 52 of the control terminal 5 that are indicated with I, II, III are associated with the respective group affiliation. An activation of a specific group affiliation button 52 effectuates the control of the sound outputted by the pair of speakers 151 of the headset(s) 15 that are/is affiliated to the group 11 to be addressed. That means, for the embodiment shown in figure 3, on activation of the button 52 for group II, the level of noise-cancellation may be reduced for all headsets 15 in the classroom 1 that are affiliated to the group II.

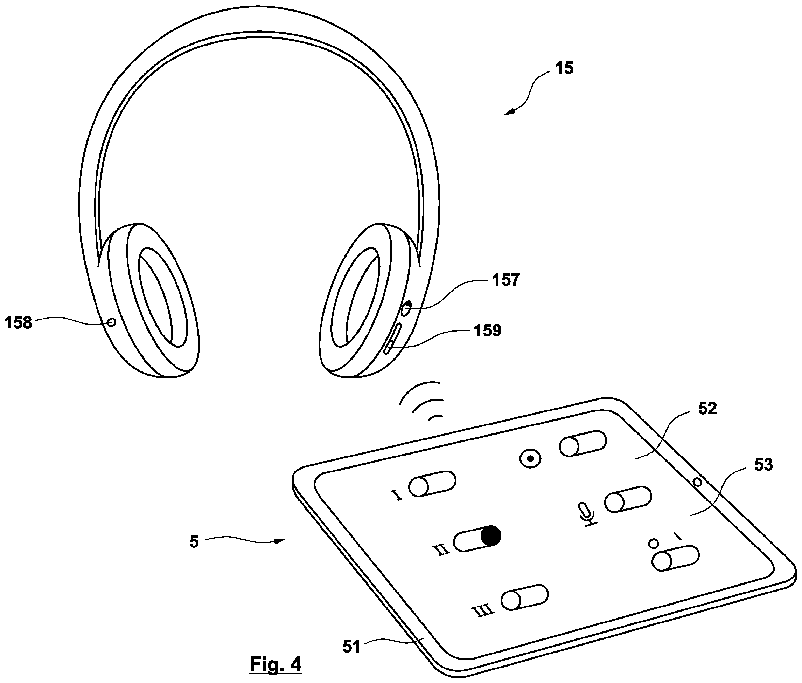

Figure 4 shows a further embodiment of an arrangement comprising the headset 15 of figure 3 and another embodiment of the control terminal 5.

The headset 15 differs from the headset 15 of figure 3 in that it has no default group affiliation.

The control terminal 5 according to the embodiment shown in figure 4 differs from the control terminal 5 of figure 3 in that the processing unit of the control terminal 5 is further configured to set a group affiliation for headsets 15. Particularly, the control terminal 5 of this embodiment has configuration capabilities for the headset 15. The control terminal 5 can be an end-user device 16, particularly be a computer, a laptop, a tablet, a mobile phone or such. Such state-of-the-art end-user devices comprise data link units of the above mentioned types, namely Wi-Fi, Bluetooth, 4G and/or 5G, and the processing units of the end-user devices also have the capabilities to automatically or manually establish a datalink connection to headset 15 provided with at least one corresponding communication unit.

The control terminals 5 allow the teacher 13 to have almost full control over the group affiliation of the headsets 15, so that a misuse of the headsets 15 by the pupils 12 is prevented. Further, the control terminals 5 allow a simple and intuitive control of the headsets 15 via the terminals 5. This allows the teacher 13 to concentrate on the interaction with the pupils and less on the administrative or technical issues that might be accompanied with digitalized classrooms 1.

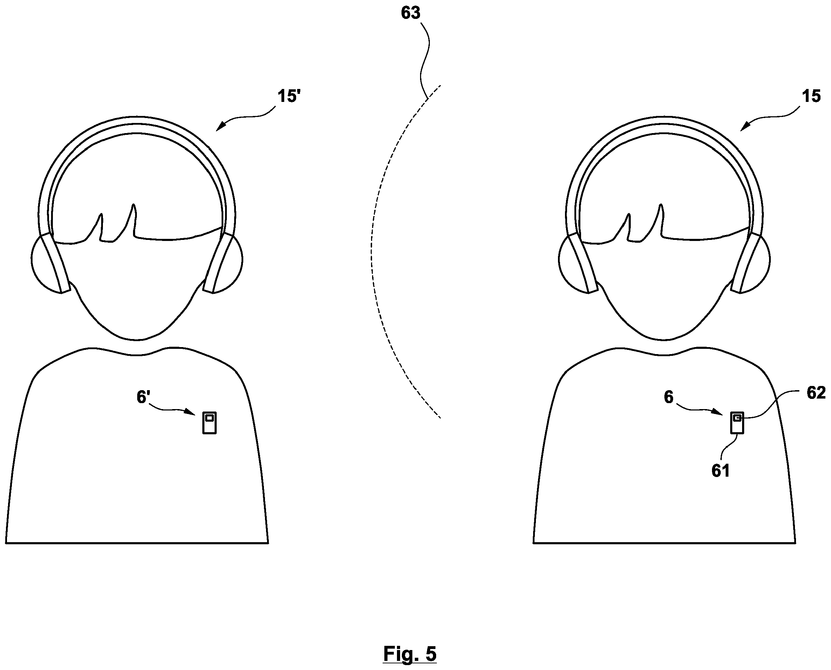

As shown in figure 5, the headsets 15, 15' and/or the arrangement can also comprise proximity tags 6,6', which can also be referred to as beacons. The proximity tags 6, 6' can particularly refer to additional components of the proximity unit, particularly one of the sending unit or the receiving unit, of the proximity detection unit of the headset 15.

As shown in figure 5, both participants can each wear headsets 15, 15' and respectively associated proximity tags 6, 6'. This allows the headsets to dynamically affiliate e.g. the headset 15 to the other headset 15' or a group of the other headset 15, 15', or vice versa.

The proximity tags 6,6' can perform or add a higher quality of the proximity, position and/or distance detection of one headset 15, 15' to another headset 15, 15'.

The proximity tag can be based on one of the types of proximity detection units described above, e.g. be based on the abovementioned IR LED. The IR LED sensor of the headset 15 worn by the participant 12,13 can sense an LED light emitted by the proximity tag 6 worn by the other participant 12,13. Particularly, the sensor can sense the intensity and/or the orientation of the proximity tag 6 and affiliate the headset 15 to the group associated with the proximity tag 6.

The group affiliation can also depend on the proximity and/or the orientation of the headsets 15, 15' to each other. The group affiliation can particularly depend on a proximity range limit 63 associated with the threshold, wherein the proximity of the headsets 15, 15' shall particularly be smaller than the proximity range limit 6. That means, the headset 15, 15' can be affiliated to the group of the other headset when the proximity detection unit and/or the proximity tag 6 is within the proximity range limit 63 of the headset. Further, the sensor may distinguish orientations of the tags 6,6'. in order to allow an orientation-related group affiliation of the headsets 15, 15'. The sensor and/or the processing unit of headsets 15 can e.g. be configured to sense the proximity detection unit of the other headset 15' and/or the proximity tag 6' associated with the other headset 15' within an orientation range and to affiliate the headset 15 to the group of the other headset 15' when being within a predefined orientation limit range. This allows the participants 12, 13 and the headsets 15,15', respectively, to be affiliated to the same group when being oriented in a specific way to one another e.g. when facing each other. In a group scenario, this allows e.g. the teacher 13 to address pupils 12 of different groups 15 dynamically thereby allowing a simple and intuitive interaction between the participants 12,13 of the merged, multi-group classroom 1.

The proximity tag 6 can also be based on an indoor positioning system that provides sufficient accuracy and read distances for the desired proximity detection in classrooms 1. The indoor positioning system can be based on a Wi-Fi, e.g. 'received signal strength' RSS, system, or on a Bluetooth, e.g. 'micro mapping' or 'geo-fencing', system, or on a geolocation, such as 5G positioning, system. As an example, Wi-Fi-RSS systems rely on the cubic decay of the signal intensity over distance between e.g. the proximity tag 6 and the Wi-Fi unit of the broadband network 2, 3, which allows a proximity detection of the remaining signal intensity during the Wi-Fi communication between the tag and/or the headset, respectively.

The signal patterns of the proximity tags 6,6' can be uniquely associated with the identifiers of the corresponding headsets 15, 14'. Moreover, the abovementioned threshold, here with respect to the read signal intensity of proximity tag 6, equals a proximity radius 63 around the proximity tag 6 that needs to be crossed by the headset 15' in order to assign the headset 15' to the group associated with the participant 12, 13 wearing the headset 15 and proximity tag 6.

The proximity tags allow a spatial participant mapping, i.e. an indoor positioning of participants 12,13, in the classroom independently from the headset 15, 15' used in the classroom 1, using for example the end-user devices 16 and the Wi-Fi broadband network 3. The arrangement integrated in the E-Dome knowledge transfer ecosystem can therefore also comprise Internet of things (IoT) devices.

Proximity tags as part of the arrangement and/or the E-Dome knowledge transfer ecosystem can also allow headsets to control the sound outputted to the pair of speakers on the group affiliation of a participant of the classroom without the participant wearing a headset 15. For example, the level of noise-reduction can be reduced when a pupil 12 wants to address the teacher, who is not wearing a headset, and directly talk to the teacher 13 without taking off the headset.

Besides the application scenario for the headsets 15 that are shown in figure 2 and correspondingly describe above, figures 6 to 9 refer to application scenarios for the headsets 15, 15' in combination with the end-user devices 16 as arrangements within the classroom 1.

In the application scenario shown in figure 6, pupils 12 of the same age group 11 are grouped at tables, whereas the teacher 13 can dynamically change between teaching locations A, B, C, to be in close proximity to the group to be taught at a time. This includes a correspondingly movable board 17. The teacher 13 and the pupils 12 may each wear the headset 15 according to figure 4. The teacher 13 and the pupils 12 may also wear headsets according to figure 2 or figure 3. This is equivalent, since the processing unit may be configured to override a manual editing of the buttons by an external data input when received via the communication unit 156.

The teacher 13 employs a control device 5 according to figure 4 in order to connect to the audio stream of the pupils 12 of age group I. When the respective button for addressing group I is activated, the teacher is able to speak to the pupils 12 of group I since the processing unit reduced, particularly faded down, the level of noise-cancelling from 100% down to at least 80%, at least 60%, at least 40% or less, for example to 50%. This draws the attention of the pupils 12 to the teacher 13, who can then address the pupils for example to start a synchronous learning phase, where all the pupils 12 of group I can switch off their headsets 15. The processing unit can also be configured such that the level of noise-cancelling is reduced to about 0% on activation of the respective button by the teacher, which allows the pupils to keep their headsets 15 worn. The processing unit can further be configured such that channel of the headsets 15 affiliated to group I is switched to a channel, where only the teacher's voice is outputted by the pair of speakers 151, which is recorded by the microphone 155 of the headset 15 of the teacher 13 and sent to the connection unit of the headsets 15 of the pupils 12. After the learning phase, the teacher deactivates the group affiliation of his headset, so that the pupils 12 can resume to their asynchronous learning phase.

When the teacher 13 wants, according to the teaching schedule, to address group II for a teaching session, he can move the board 17 to position B and activate button II on the screen of his terminal 5. Here, a proximity mode of operation would be inadequate for use, since the pupils 12 of each of the groups I, II, III are in a similar proximity to the teacher 13 and the headphone 14 of the teacher as the positioning reference for the proximity detection, respectively.

Referring to figure 7, were in the application scenario differs from the application scenario of figure 6 in that the teacher wears a headset 15 according to an embodiment of figure 2 described above. In this case, the teacher is able set the mode of operation on her/his own by activating a respective group affiliation button 158 at his headset 15 for addressing the desired age group 11. In this case, the teacher 13 has set the mode of operation to voice command mode by pressing the respective button 158 at his headset 15.

In this application scenario, the teacher 13 may speak a keyword or key phrase associated with the age group 11 to be addressed, for example "referring to the group three", to all participants 12, 13 in the classroom 1, whereas only the headsets 15 being affiliated to the respective age group 11, in this case group III, the level of noise-cancelling of the noise-cancelling headset 15 affiliated with the group III is reduced, such that the pupils 13 of the respective group II address can hear the teacher 13 speaking. Thereby, the teacher 13 gains the attention of the respective group of pupils 12 for being able to perform a shift from an asynchronous learning phase to a synchronous learning phase. The advantage over the use of a control terminal 6 for the teacher 13 is to work hands-free, since no end-user device, such as a control terminal, needs to be set up and/or employed.

The processing unit can particularly be configured to reduce the level of voice-cancelling only by a voice command of the teacher. This requires the processing unit to be trained in the voice of the teacher, which can be performed using the speech recognition unit of the processing unit. This prevents a misuse of the headsets 15 of the pupils 13.

The implementation of the voice recognition in each headset 15 has the advantage that no intermediate device is necessary to control the headsets. However, also the end-user devices 16, particularly the control terminal 5 can comprise a microphone to record voice commands, wherein the respective processing unit of the end-user device 16 is configured to receive and analyze the voice commands and to derive and send a respective data input to the communication devices of the headsets 15.

Figure 8 refers to a work group scenario using the proximity mode of the headset 15. The teacher wears a headset 15" according to the embodiment of figure 2, whereas the pupils wear headsets 15, 14' and proximity tags 6, 6' according to the embodiment of figure 4.

The pupils 12, 12' are located in the classroom 1 such that their distance is smaller than their respective proximity range limits 63, 63' corresponding to signal intensity threshold of the proximity tags 6, 6'. Since, due to the proximity being smaller than the proximity range limit 63, 63', the headsets 15, 15' are affiliated to the same group II. For this reason, the pupils 12, 12' can speak to each other via the microphone voice input and can listen to each other via the pair of speakers 151 of their headsets 15, 15', respectively, without the need to take off the headsets 15, 15'. For the same purpose, the processing unit can also be configured to combine an audio educational content streamed from the Knowledge Factory, e.g. a stream of an online conference with a remote teacher, with the conversation stream between the group members.

In figure 8, the teacher 13 is located outside the range limits 63, 63' of the pupils 12, 12', graphically represented in that the range limit circle 63" of the teacher 13 does not overlap with neither the headsets 15, 15' nor the proximity tags 6,6'worn by the pupils 12, 12'. The group affiliation of the teacher 13 only changes to the group affiliation of the pupils 12, 12' after coming as close to one of the pupils 12,12' such that the teacher's proximity range limit 63" is smaller than the spatial proximity of the teacher to at least one of the pupils 12, 12'.

The foregoing descriptions are only implementation manners of the present invention, the scope of the present invention is not limited to this. Any variations or replacements can be easily made through person skilled in the art. Therefore, the protection scope of the present invention should be subject to the protection scope of the attached claims.

## Claims

1. A noise-cancelling headset for participants of a multi-group classroom for use in a knowledge transfer ecosystem, comprising:
a connection unit, such as a jack, a Bluetooth, a Wi-Fi, a 4G or a 5G connection unit, for receiving learning content from a database of the knowledge transfer ecosystem,
a microphone for receiving a surrounding sound from a surrounding area of the classroom,
a pair of speakers for outputting sound, such as noise-cancelling sound and/or sound received from the knowledge transfer ecosystem as audio educational content, and
a processing unit for computing the noise cancelling sound based on the received surrounding sound,
wherein the processing unit is configured to control the sound outputted by the pair of speakers based on a group affiliation of the headset

2. The headset of claim 1, wherein the processing unit is configured to control an intensity of the noise-cancelling sound and/or a loudness of the audio learning content sound outputted by the pair of speakers based on the group affiliation of the headset.

3. The headset of claim 1 or 2, wherein the processing unit is configured to switch the sound outputted by the pair of speakers from a first sound channel to be outputted to a first group of participants to a second sound channel to be outputted to a second group of participants.

4. The headset of one of the preceding claims, wherein the processing unit is configured to control the sound based on a data input by a teacher among the participants of the classroom received via the connection unit, particularly based on a data input received from a control terminal.

5. The headset of one of the preceding claims, further comprising a control button for generating a data input on activation, the button being connected to the processing unit and particularly being associated with a group affiliation, wherein the processing unit is configured to control the sound based on a data input from the button.

6. The headset of one of the preceding claims, further comprising a proximity detection unit for detecting a spatial proximity of the headset to at least one other headset, wherein the processing unit is further configured to affiliate the headset to the group affiliation of the other headset based on the detected spatial proximity.

7. The headset of claim 6, wherein the processing unit is configured to affiliate the headset to the group affiliation of the other headset based on relating the detected spatial proximity to a threshold.

8. The headset of claims 6 or 7, wherein the proximity detection unit comprises an IR sensor for detecting the spatial proximity and/or a relative orientation of the headset relative to another headset.

9. The headset of one of the preceding claims, wherein the processing unit is configured to control the sound based on an audio input recorded by the microphone from the surrounding area of the classroom, the audio input particularly being a voice input by the teacher.

10. The headset of claim 9, wherein the processing unit comprises a speech recognition unit for extracting an audio input from the sound received from the surrounding area of the classroom via the microphone, the speech recognition unit particularly being a machine learning speech recognition unit.

11. The headset of one of claims 4 to 10, wherein the processing unit is configured to switch between sound control operation modes of the headset, wherein the buttons being connected to the processing unit are associated to the respective sound control operation modes, particularly each being associated to exactly one of the respective sound control operation modes.

12. A control terminal for a teacher among participants of a multi-group classroom for use in a knowledge transfer ecosystem for sending a control signal for controlling the sound outputted by noise-cancelling headsets, particularly the noise-cancelling headsets according to one of the preceding claims, the control terminal comprising:
at least two buttons for generating the control signal, wherein each of the at least two buttons is associated to a group affiliation of at least one of the headsets,
a data link unit being compatible with the connection unit of the headsets for setting up a data link connection to the headset,
a processing unit for controlling the data link unit to send the control signal to the headsets.

13. An arrangement for participants of a multi-group classroom for use in a knowledge transfer ecosystem, comprising:
a plurality of noise-cancelling headsets of one of the claims 1 to 11, and
at least one control terminal according to claim 12.

14. A computer-implemented method for a sound control in headsets for participants of a multi-group classroom for use in a knowledge transfer ecosystem, comprising:
receiving learning content from a database of the knowledge transfer ecosystem,
receiving a surrounding sound from a surrounding area of the classroom via a microphone,
outputting sound, such as noise-cancelling sound and/or sound received from the knowledge transfer ecosystem as audio educational content via speakers of the headset,
wherein a processing unit computes the noise-cancelling sound based on the received surrounding sound,
wherein the control of the sound outputted by the pair of speakers is based on a group affiliation of the headset.

15. A computer-readable storage medium storing program code, the program code comprising instructions that when executed by a processor carry out the method of claim 14.
